# EUROPEAN PATENT APPLICATION

(11) **EP 2 326 022 A1**
(43) Date of publication of application: **25.05.2011**
(21) Application number: 09176797.0
(22) Date of filing: 23.11.2009
(51) Int. Cl.: H04B 1/707

(54) **Device for acquiring a spread spectrum signal**

(71) Applicant: NXP B.V., 5656 AG Eindhoven (NL)
(72) Inventor: Rechberger, Andreas, 5656, AE Eindhoven (NL); Arnold, Siegfried Hermann, 5656, AE Eindhoven (NL); Schmidt, Reinhold, 5656, AE Eindhoven (NL); Winter, Christian, 5656, AE Eindhoven (NL)
(74) Representative: Krott, Michel

(57) **Abstract**

A device (100) for acquiring a spread spectrum signal is provided, wherein the device (100) comprises a sequencing unit (101) and a correlation unit (102). The sequencing unit (101) is adapted for providing a first portion of a received signal to the correlation unit, and the correlating unit is adapted for performing a correlation between the provided first portion of the received signal and a pseudo random noise signal and for acquiring the spread spectrum signal out of the received signal.

## Description

### FIELD OF THE INVENTION

The invention relates to a device for acquiring a spread spectrum signal.

Beyond this, the invention relates to a transponder.

Furthermore, the invention relates to a method for acquiring a spread spectrum signal.

Moreover, the invention relates to a program element.

Furthermore, the invention relates to a computer-readable medium.

### BACKGROUND OF THE INVENTION

The importance of automatic identification systems increases particularly in the service sector, in the field of logistics, in the field of commerce and in the field of industrial production. For example contactless identification systems like transponder systems are suitable for a wireless transmission of data in a fast manner and without cable connections that may be disturbing. Such systems use the emission and reflection/absorption of electromagnetic waves, particularly in the high frequency domain. Further, automatic identification systems may also be used in the field of remote keyless entry systems.

For such systems, spread-spectrum techniques may be used for transmitting and/or decoding signals. Spread-spectrum techniques are methods by which electromagnetic energy generated in a particular bandwidth is deliberately spread in the frequency domain, resulting in a signal with a wider bandwidth. These techniques are used for a variety of reasons, including the establishment of secure communications, increasing resistance to natural interference and jamming, to prevent detection, and to limit the power flux density on satellite downlinks.

Common spread spectrum receiver units do employ advanced techniques to perform signal detection (acquisition). For direct Sequence Spread Spectrum (DSSS) the signal detection requires the exploration of a 2 dimensional search space. The first dimension is dominated by number of possible code phases of the repetitive pseudo random sequence (PRN sequence, spreading code), whereas the second dimension is the difference of the transmitted signals frequency and the frequency expected by the receiver (frequency offset).

While the length of the PRN sequence is a design parameter of the system (the longer its length the more powerful the DSSS system is, in terms of jamming resistance), the frequency offset is dominated by real-life imperfections (differences in frequency reference of receiver/transmitter) as well as physical effects like Doppler shifts.

In order to reduce the time required for an acquisition, DSSS receivers usually have dedicated hardware blocks (correlators) bound to a dedicated (group) of PRN codes (like gold sequences of particular length).

Alternatively a DSSS receiver can use a DSP based approach (software defined radio) of doing the signal search, which is generally more flexibly than the hardware correlators (not bound to a group of PRN sequences) but slower as well as having a higher power consumption due to the existence of the DSP.

For spread spectrum receivers, the primary effort is to identify the presence of a signal (acquisition) and acquire a lock (tracking) to actually decode its content. Especially for half-duplex systems the acquisition time is one of the major distinctive features. Different to simplex systems (for example GNSS like GPS) where the receiver is only rarely performing a "cold acquisition" (detecting a signal with no prior knowledge or estimate on spreading code phase or frequency offset), for a half-duplex receiver this is the regular case. Every time when switching from receive to transmit (and vice versa) the synchronization is totally lost.

In addition for a car communication system the receiver (the car on the parking lot) and the transmitter (the key just put out of the pocket) might have quite different environmental conditions (temperature), which do contribute to the frequency uncertainty.

### OBJECT AND SUMMARY OF THE INVENTION

It is an object of the invention to provide a device for acquiring a spread spectrum signal saving memory resources.

In order to achieve the object defined above, a device for acquiring a spread spectrum signal, a method for acquiring a spread spectrum signal, a transponder, a program element and a computer-readable medium according to the independent claims are provided.

According to an exemplary embodiment of the invention, a device for acquiring a spread spectrum signal is provided. The device may comprise a sequencing unit and a correlation unit, wherein the sequencing unit is adapted for providing a first portion of a received signal to the correlation unit, and wherein the correlating unit is adapted (a) for performing a correlation between the provided first portion of the received signal and a pseudo random noise signal and (b) for acquiring the spread spectrum signal out of the received signal.

With this embodiment, a device for acquiring a spread spectrum signal may be provided which is not dependent from limitations of a CPU (central processing unit) and does not rely on a hard coded PRN (pseudo random noise) sequence. The device may be provided in hardware instead of software.

For not relying on a hard coded PRN sequence, an autonomous sequencing unit (state machine) may perform the following task. A first portion of input data or a received signal from an RF front end (ADC) may be provided to a correlation unit. Further portions of the signal may be for example ignored. Either the RF front end can be switched off, or the input data is stored into a buffer (interleaved operation).

The correlation unit may cycle through all the possible PRN code phases and may perform a DFT (discrete fourier transformation) correlation.
a. A simple counter may fetch the first portion of the received signal, for example stored in a buffer, in the recorded order.
b. With every fetch a new (sub-chunk) of the PRN sequence may be requested.
c. This PRN sub chunk may need to be over sampled to match the sampling rate stored data. Such an over sampling simply means to repeating each code bit of the PRN sequence at a rate of fs/chiprate.
d. The buffer usually may be organized in words (RAM bus width) therefore the n-bit wide stored data may be correlated (XOR) with the over sampled sub-chunk of the PRN code.
e. The complex correlation result may than be subsequently accumulated until the accumulated number of samples equals the selected chunk size.
f. The chunk result may be stored into one of the DFT bins
g. The sequence may continue until all DFT bins are filled (the last recorded data has been fetched).
h. The DFT calculation may take place, whereas the result is only stored if having a larger threshold than any of the previous calculations.
i. The sequence may be repeated for all the PRN code phases (hence N times, with N being the length of the spreading code).
j. Once all PRN phases are searched the finals result may be available.

For each cycle the calculation results may consist of a code and frequency estimate as well as a threshold value. Only the estimation results of the cycle with the maximum threshold may be of interest. The result of cycles having a lower threshold than the previous best estimate may be discarded.

According to another exemplary embodiment of the invention, a method for acquiring a spread spectrum signal is provided. The method may comprise providing a first portion of a received signal from a sequencing unit to a correlation unit, performing a correlation between the provided first portion of the signal and a pseudo random noise signal by the correlation unit, and acquiring the spread spectrum signal out of the received signal.

According to still another exemplary embodiment of the invention, a program element (for instance a software routine, in source code or in executable code) is provided, which, when being executed by a processor, is adapted to control or carry out a method for acquiring a spread spectrum signal having the above mentioned features.

According to yet another exemplary embodiment of the invention, a computer-readable medium (for instance a semiconductor memory, a CD, a DVD, a USB stick, a floppy disk or a harddisk) is provided, in which a computer program is stored which, when being executed by a processor, is adapted to control or carry out a method for acquiring a spread spectrum signal having the above mentioned features.

Acquiring a spread spectrum signal which may be performed according to embodiments of the invention can be realized by a computer program that is by software, or by using one or more special electronic optimization circuits, that is in hardware, or in hybrid form, that is by means of software components and hardware components.

According to another exemplary embodiment of the invention, a transponder for radio communication is provided, wherein the transponder comprises a device with the above mentioned features. The transponder may be adapted for wireless communication. The transponder may preferably be one of the group consisting of a remote keyless entry device, an automatic meter reading device, a smart card, a contactless chip card and a RFID tag. The term "remote keyless entry device" may denote a device used in a remote keyless entry system, which is designed to remotely permit or deny access to premises or automobiles. The term "automatic meter reading device" may denote a device used in an automatic meter reading system (AMR). AMR is the technology of automatically collecting consumption, diagnostic and status data (in particular in the field of water meter or energy metering devices) and transferring that data to a central database for billing, troubleshooting and analyzing. The term "transponder" may particularly denote an RFID tag or a (for instance contactless) smart card. More generally, a transponder may be a device (for instance comprising a chip) which may automatically transmit certain (for example encoded) data when activated by a special signal from an interrogator. Such a transponder may be adapted for communication with a communication partner device such as a reader device. The term "reader device" may denote a base station adapted for sending an electromagnetic radiation beam for reading out a transponder and detecting a back reflected signal. Such a reader device may be an RFID reader, for instance.

In the following, further exemplary embodiments of the device will be explained. However, these embodiments also apply to the method, to the transponder, to the program element and to the computer-readable medium.

The device may further comprise a first buffer for storing the first portion of the received signal. Input data or the received signal, for example received from an RF front end (ADC), may be directly stored into a buffer. For the buffering, it may be sufficient to quantize the input to a single bit for In-phase and Quadrature component. This quantization may limit the stored samples to one out of four possible values (1+j, 1-j, -1+j, -1-j) or a four phase vector (0°, 90°,180°,270°), which is sufficient for BPSK modulated signals.

The first buffer may be a Random Access Memory. A Random Access Memory (RAM) is a kind of computer storage. If a CPU/DSP would be used, acquiring a spread spectrum signal would require more than one memory access to perform the correlation of one of the sub-chunks (one to fetch the buffered data, one to fetch the op-code for doing so, another one to store the result ...). Even with having different memory interfaces (modules) for program code, intermediate result storage and recorded data, the CPU based approach cannot fully utilize the possible speed of the buffer RAM. By using RAM, the maximum speed may be only limited by the buffer RAM itself. The correlation and its results can be performed with the fetch rate of the buffer RAM. The use of a RAM may be advantageous since such a memory may be already present in the total system. If the system is a more complex system (for example interleaved operation), more sequential read/write operations (working independently) may be required. This may lead to the requirement of a random access.

Alternatively, a sequential access to the data signal may be possible without using a random access. The device may further comprise a second buffer for storing the received signal. By using a second buffer, further portions of the received signal or data from the RF front end may be stored (interleaved operation).

The sequencing unit may further be adapted for providing a further portion of the received signal to the correlation unit during a further cycle of the sequencing unit and the correlation unit may further be adapted for performing a correlation between the further provided portion of the received signal and the pseudo random noise signal during the further cycle.

This may be carried out until the whole received signal has been processed.

The device may further comprise a tracking unit adapted for receiving the acquired spread spectrum signal for acquiring a lock for decoding the spread spectrum signal.

The result of the correlation unit may be handed over to the tracking unit. For example, once the sequencer has finished processing all PRN code states, the result of the correlation unit may be handed over. With the acquired lock, the received encoded signal may be decoded.

The device may be adapted for wireless communication with a communication partner device, for exchanging data with the device. For this purpose, the device and the partner device may comprise corresponding transmission elements. For instance, the device may comprise an antenna, wherein the reading device may comprise a corresponding receiving antenna. However, the inventive device is not limited to wireless or contactless data transmission, but in principle also applies to wired communication.

The device may also be adapted for a wired communication with a communication partner device. Such a system may be for example a smart metering system, garage door opener system or baby monitoring system (baby alarm). The device may be read via a physical connection.

The device may be a portable device. A portable device may be a device which is configured (regarding size and weight) to be carried by a user during normal operation of the device. Such devices may require processing and memory management units requiring as less energy and/or space as possible. Examples for portable devices are a mobile phone, a headset, a headphone playback apparatus, a hearing aid, a gaming device, an audio player, a DVD player, a CD player, a hard disk-based media player, a radio device, an internet radio device, an MP3 player, a medical device, a body-worn device, a speech communication device, or an key.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited.
Fig. 1 illustrates a device for acquiring a spread spectrum signal according to an exemplary embodiment of the invention.
Fig. 2 illustrates a device for acquiring a spread spectrum signal according to a further exemplary embodiment of the invention.
Fig. 3 illustrates a device for acquiring a spread spectrum signal according to a further exemplary embodiment of the invention.
Fig. 4 illustrates a hardware correlator.

### DESCRIPTION OF EMBODIMENTS

The illustration in the drawing is schematically. In different drawings, similar or identical elements are provided with the same reference signs.

For spread spectrum receivers the primary effort is to identify the presence of a signal (acquisition) and acquire a lock (tracking) to actually decode its content. Especially for half-duplex systems the acquisition time is one of the major distinctive features. Different to simplex systems (e.g. GNSS like GPS) where the receiver is only rarely performing a "cold acquisition" (detecting a signal with no prior knowledge or estimate on spreading code phase or frequency offset) for a half-duplex receiver this is the regular case. Every time when switching from receive to transmit (and vice versa) the synchronization is totally lost. In addition for a car communication system, the receiver and the transmitter might have quite different environmental conditions, which do contribute to the frequency uncertainty. In order to still benefit from the benefits of a spread spectrum communication (narrow band interferer immunity, or simply to follow national regulations like FCC/ETSI) a fast acquisition is required.

There exist several methods to perform this activity, which usually can be divided into two groups. The first one uses hard-ware correlation units to detect the signal, the second one do perform the signal search via software (DSP approach).

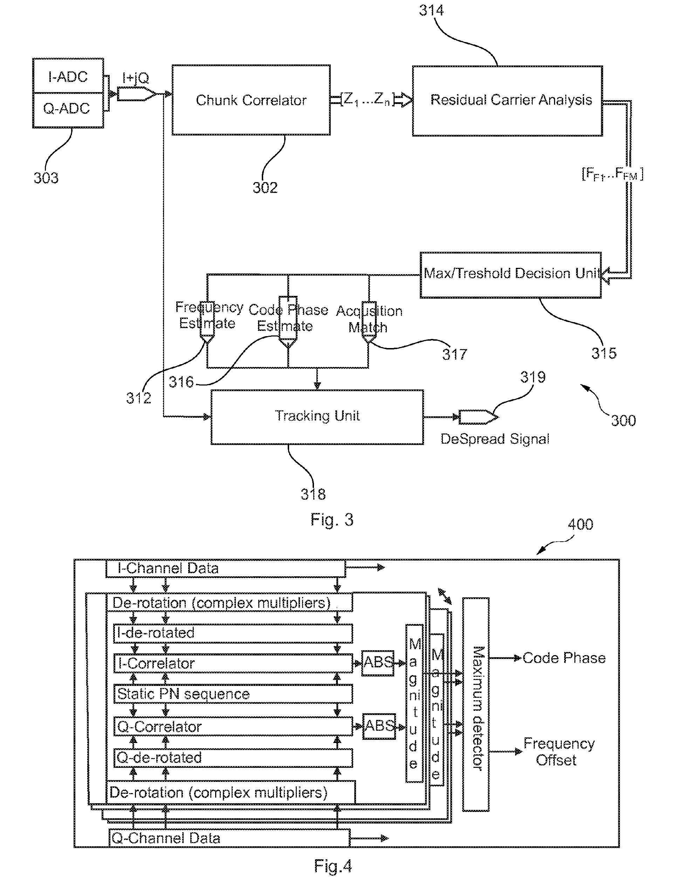

The hardware correlators, as illustrated in **Fig. 4****,** do no scale well with longer spreading codes and higher frequency offsets allowed. This is mainly caused by the need to duplicate the correlator / derotation structures (M time). In addition the length of the data/derotation/correlator structures need to be increased on linear scale with the length of the spreading code. Allowing the PN sequence itself to change (multiple PN sequences) especially if using PN sequences of different length does scale the hardware effort nonlinear. This method is also called full parallel search. The two-dimensional search space (frequency, phase) may be rastered and each element is searched concurrently.

The software based solution suffers from the fact that the power consumption of the CPU/DSP is too high - especially for low power (battery powered) systems where no dedicated signal processing CPU (DSP) is available and the software is executed on a general purpose processor (CPU) shared with other tasks.

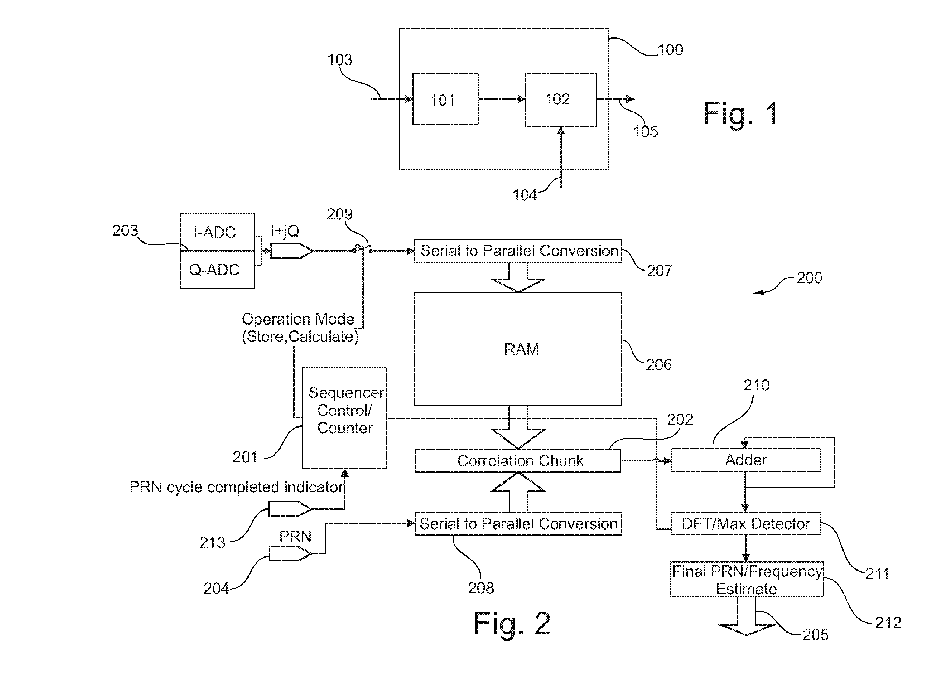

The solution to the above problems is an acquisition device 100 as illustrated in **Fig. 1****.** A signal 103 is provided to the device 100. A sequencing unit 101 is adapted for providing a first portion of the received signal to a correlation unit 102. The correlation unit 102 is adapted for performing a correlation between a pseudo random noise signal 104 and the first portion of the received signal. The correlation unit outputs a result 105 of the correlation.

**Fig. 2** illustrates a further exemplary embodiment of the device 100 according to the invention. The device 200 does not rely on a hard coded PRN sequence. Therefore, the input data 203 is first stored for further processing (buffer 206). The buffer size suitably - but not necessary - is equal or larger than a data bit duration. A sequencing unit does now perform the following tasks.
1. The input data from the RF front end (ADC) is directly stored into a buffer 206 via a switch 209. For the buffering it is sufficient to quantize the input to a single bit for In-phase and Quadrature component. This quantization does limit the stored samples to one out of four possible values (1+j, 1-j, -1+j, -1-j) or a four phase vector (0°, 90°,180°,270°), which is sufficient for BPSK modulated signals.
2. Once the buffer is full further data from the RF front end is ignored. Either the RF front end can be switched off, or the input data is stored into a second buffer (interleaved operation).

3. It cycles through all the possible PRN code phases and performs a DFT correlation.
   a. A simple counter does fetch the stored data from the buffer in the recorded order.
   b. With every fetch out of the buffer a new (sub-chunk) of the PRN sequence is requested.
   c. This PRN sub chunk needs to be over sampled to match the sampling rate stored data. Such an over sampling simply means to repeating each code bit of the PRN sequence at a rate of fs/chiprate.
   d. The buffer usually is organized in words (RAM bus width) therefore the n-bit wide stored data is correlated (XOR) with the over sampled sub-chunk of the PRN code.
   e. The complex correlation result is than subsequently accumulated until the accumulated number of samples equals the selected chunk size.
   f. The chunk result is stored into one of the DFT bins The sequence continues until all DFT bins are filled (the last recorded data has been fetched).
   g. The DFT calculation takes place, whereas the result is only stored if having a larger threshold than any of the previous calculations.
   h. The sequence is repeated for all the PRN code phases (hence N times, with N being the length of the spreading code).
   i. Once all PRN phases are searched the finals result is available.
2. For each cycle the calculation results consist of a code and frequency estimate as well as a threshold value (211, 212).
3. Only the estimation results of the cycle with the maximum threshold are of interest. The result of cycles having a lower threshold than the previous best estimate is discarded.

Once the sequencer has finished processing all PRN code states, the result is handed over to the tracking unit 313, illustrated in **Fig. 3****.**

The correlation loop under item 3 may also be carried out in the following manner. The DFT method (correlation in chunks - performing the DFT correlation on sequence of chunk results) may search one dimension of the search space (frequency). Thus, the full parallel search may be simplified. For example, the de-rotation and the m-fold interlacing may be omitted.

The correlation unit may be in this case a chunk correlator. Instead of an ABS/Magnitude decoder, a DFT may be used. For this arrangement, the input data (I/Q-Channel Data) have to be applied paralell (shift register), which is non-economic for longer PRN sequences.

This may be avoided by the following method. The data may be written into a RAM. Therefore, they are supplied to a serial-to-parallel converter, and all n bits (e.g. 32 or 64) a new RAM word is written. For each new word, the RAM memory is readout (beginning with the newly written word with increasing addresses. With a significant smaller parallelization (32/64 bit), the whole RAM word may be supplied to the chunk correlator. The processing speed of the correlator/DFT(FFT) blocks may be chosen so that, during a range of 32/64 input clocks, the whole RAM is readout.

For a 64 bit RAM with 128 words (8 kbit), that means that the processing clock is only four times faster than the input clock (64 / 2 (32 bit I, 32 bit Q) -> 32, 128 (addresses) / 32 (input clock) 〉̶ 4 processing cycles per input clock).

Thus, the performance of an ideal system (full-parallel) may be achieved, but with significant lower effort. The foregoing description (store / calculate) is similar, only a little slower, which is also an advantage (Power Consumption Profile).

The signal may pass a Serial-to-Parallel-Converter 207 before being passed to the RAM 206. Also the pseudo random noise signal may pass a Serial-to-Parallel-Converter 208 before being input to the correlation unit. The sequencing unit 201 may also receive a clock or cycle signal 213. The result of the correlation unit may be provided to an adder 210, coupled to a DFT maximum detector 211, which is coupled to final PRN/frequency estimating unit 212.

The calculation of the DFT can be more efficiently done in hardware, especially if the number of bins can be reduces to numbers in the range of 8 to 16 (16 point DFT).

The correlator or correlation unit 202 itself is limited to the size of a single chunk and therefore does not consume much hardware. Ideally it is aligned with the bus width of the storage unit (RAM).

The device illustrated in Fig. 3 comprises in addition to above mentioned units a unit 314 for a residual carrier analysis. The output of unit 314 may be provided to a maximum/treshold decision unit 315. The output of the unit 315 may be provided to a frequency estimating unit 312, a code phase estimating unit 316 and an acquisition match unit 317. The outputs of these three units may be combined and then provided to the tracking unit 318 together with the input signal for acquiring a lock for decoding the signal. Subsequently, the signal may be de-spread (319).

This approach is CPU/software less. This allows performing the acquisition task more power efficient and faster. In difference to a CPU based solution this can be freely adjusted in speed (even with a fractional clock), whereas the CPU based solution can only be configured via the CPU clock (which usually cannot be freely chosen as well as not being directly proportional to the speed (memory latency, caches).

Besides the power consumption issues (and the fact that a DSP solution does require additional memories for the program code) the main advantage of this the possible speed. A DSP based solution (more or less performing the same algorithm) is limited in speed for several reasons. Fetching the recorded data, calculating the over sampled sub-chunk of the PRN sequence and performing the calculation can only performed in a serial manner. The speed with which the CPU can perform these tasks is limited by the execution speed of its decoder engine and the speed of the op-code / data fetch engine (memory bus). In today's technology the limit of the memory is more dominated. However in any case the CPU/DSP requires more than one memory access to perform the correlation of one of the sub-chunks (one to fetch the buffered data, one to fetch the op-code for doing so, another one to store the result ...). Even with having different memory interfaces (modules) for program code, intermediate result storage and recorded data the CPU based approach cannot fully utilize the possible speed of the buffer RAM. The proposed device and method can operate at a maximum speed only limited by the buffer RAM itself. The correlation and its results can be performed with the fetch rate of the buffer RAM. This allows for high speed acquisition, as well supports low power systems. The later one is caused by the fact that if keeping the acquisition time constant the proposed method does operate slower than a DSP based solution, and with less hardware than a pure correlator based solution.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. A device (100) for acquiring a spread spectrum signal, the device (100) comprising a sequencing unit (101); and
a correlation unit (102);
wherein the sequencing unit (101) is adapted for providing a first portion of a received signal to the correlation unit, and
wherein the correlating unit is adapted
for performing a correlation between the provided first portion of the received signal and a pseudo random noise signal and
for acquiring the spread spectrum signal out of the received signal.

2. The device (100) according to claim 1, further comprising a first buffer for storing the first portion of the received signal.

3. The device (100) according to claim 2, wherein the first buffer is a Random Access Memory.

4. The device (100) according to claim 1, further comprising a second buffer for storing the received signal.

5. The device (100) according to claim 1,
wherein the sequencing unit is further adapted for providing a further portion of the received signal to the correlation unit during a further cycle of the sequencing unit and
wherein the correlation unit is further adapted for performing a correlation between the further provided portion of the received signal and the pseudo random noise signal during the further cycle.

6. The device (100) according to claim 1, further comprising a tracking unit adapted for receiving the acquired spread spectrum signal for acquiring a lock for decoding the spread

7. The device (100) according to claim 1, wherein the device (100) is adapted for a wireless communication with a communication partner device (220).

8. The device (100) according to claim 1, wherein the device (100) is a portable device.

9. A transponder for radio communication, the transponder comprising the device (100) according to claim 1.

10. The transponder according to claim 9, wherein the transponder is one of the group consisting of a remote keyless entry device, an automatic meter reading device, a smart card, a contactless chip card and an RFID tag.

11. Method for acquiring a spread spectrum signal, the method comprising
providing a first portion of a received signal from a sequencing unit to a correlation unit, and
performing a correlation between the provided first portion of the signal and a pseudo random noise signal by the correlation unit, and
acquiring the spread spectrum signal out of the received signal.

12. A computer-readable medium, in which a computer program of acquiring a spread spectrum signal is stored, which computer program, when being executed by a processor, is adapted to carry out or control a method according to claim 11.

13. A program element of acquiring a spread spectrum signal, which program element, when being executed by a processor, is adapted to carry out or control a method according to claim 11.
